# EUROPEAN PATENT APPLICATION

(11) **EP 4 521 492 A1**
(43) Date of publication of application: **12.03.2025**
(21) Application number: 23928172.8
(22) Date of filing: 08.05.2023
(51) Int. Cl.: H01M 4/66, H01M 4/13, H01M 10/0525

(54) **POSITIVE ELECTRODE CURRENT COLLECTOR, POSITIVE ELECTRODE SHEET AND PREPARATION METHOD, AND BATTERY**

(30) Priority: 21.03.2023 CN 202310291428
(71) Applicant: BatteroTech Co., Ltd, Jiaxing, Zhejiang 314100 (CN)
(72) Inventor: LI, Hua, Jiaxing, Zhejiang 314100 (CN); XIONG, Jie, Jiaxing, Zhejiang 314100 (CN)
(74) Representative: Novagraaf Technologies
(86) International application number: PCT/CN2023/092694
(87) International publication number: WO 2024/192861

(57) **Abstract**

The present application relates to a positive electrode current collector and a preparation method therefor, a positive electrode sheet and a preparation method therefor, and a battery. The positive electrode current collector includes a foil and a protective layer provided on a surface of the foil. The protective layer includes inorganic particles. The ratio of a thickness of the protective layer to a thickness of the foil is 0.05-0.7. In the present application, by controlling the thickness of the protective layer containing inorganic particles, the ratio of the thickness of the protective layer to the thickness of the foil is ensured, thereby obtaining a current collector having an ultra-thin protective layer. Due to an ultra-thin structure of the protective layer, the current collector will not form wrinkles or bulges when being wound, so that the current collector can be wound and stored for later use. This further enables a step-by-step coating process in the preparation of the positive electrode sheet, avoiding the problem of the decrease in a gram capacity of the electrode sheet caused by simultaneously coating the active material layer and the protective layer.

## Description

### Technical Field

The application belongs to the technical field of current collector manufacturing, for example, a positive electrode current collector and a preparation method thereof, a positive electrode sheet and a preparation method thereof, and a battery.

### Background

A current collector is a structure or component for collecting current in a lithium ion battery. A main function of the current collector is to collect the current generated by an active material of the battery, provide an electronic pathway, accelerate charge transfer, and improve charge and discharge Coulombic efficiency. As a current collector, it needs to satisfy characteristics, such as high electrical conductivity, good mechanical performance, lightweight, low internal resistance, and low contact resistance with the active material surface.

The commonly used current collectors include aluminum current collectors, copper current collectors, composite aluminum current collectors, and composite copper current collectors. The aluminum current collector is typically prepared by rolling, the copper current collector is prepared by calendaring or electroplating, and the composite current collector is prepared by electroplating a aluminum or copper layer on a polymer material.

In order to improve the processability of an electrode sheet and the safety performance of the battery, for a positive electrode sheet, in addition to covering the surface of a current collector with an active coating, a ceramic protective layer is further coated on both sides of the active coating. Specifically, while coating the current collector with an active slurry, the ceramic protective layer is coated on the current collector by extrusion coating. However, when coated simultaneously, a portion of the ceramic may be fused with the active slurry, reducing the gram capacity of the active coating. It is urgent to solve the problem of providing a current collector with excellent processing effects while satisfying the electrochemical performance.

### Summary

The following is a summary of the subject matter described in detail herein. This summary is not intended to limit the scopes of protection of the claims.

In view of the problems existing in a related art, the present application provides a positive electrode current collector and a preparation method thereof, a positive electrode sheet and a preparation method thereof, and a battery. By controlling the thickness of a protective layer containing inorganic particles, it is ensured that a ratio of the thickness of the protective layer to the thickness of a foil is in the range of 0.05-0.7, thereby obtaining a current collector having an ultra-thin protective layer. The current collector can be wound and stored for later use. By using this current collector, a step-by-step coating process in the preparation of electrode sheets is achieved, avoiding the problems caused by simultaneous coating in the related art. Due to the structure of the ultra-thin protective layer, the electrode sheet is less likely to form wrinkles during winding, thereby avoiding the problem of bulging, and further improving the production quality.

For this purpose, the present application adopts the following technical solution:
according to a first aspect, embodiments of the present application provide a positive electrode current collector; the positive electrode current collector includes a foil and a protective layer provided on a surface of the foil; the protective layer includes inorganic particles; and
a ratio of a thickness of the protective layer to a thickness of the foil is 0.05-0.7, for example, it may be 0.05, 0.08, 0.1, 0.2, 0.5 or 0.7, but is not limited to the listed numerical values, and other non-listed numerical values within the numerical value range are also applicable.

According to the embodiments of the present application, by controlling the thickness of the protective layer containing inorganic particles, it is ensured that the ratio of the thickness of the protective layer to the thickness of the foil is in the range of 0.05-0.7, thereby obtaining a positive electrode current collector having an ultra-thin protective layer. The positive electrode current collector can be wound and stored for later use. By using this positive electrode current collector, a step-by-step coating process in the preparation of electrode sheets is achieved, avoiding the problems caused by simultaneous coating in the related art. Due to the structure of the ultra-thin protective layer, the electrode sheet is less likely to form wrinkles during winding, thereby avoiding the problem of bulging, and further improving the production quality.

The positive electrode current collector in the embodiments of the present application is applicable to a positive electrode sheet made of any positive electrode active material.

The ratio of the thickness of the protective layer to the thickness of the foil is 0.0625-0.625, for example, it may be 0.0625, 0.08, 0.1, 0.2, 0.3, 0.4, 0.5 or 0.625, but is not limited to the listed numerical values, and other non-listed numerical values in the numerical value range are also applicable.

The ratio of the thickness of the protective layer to the thickness of the foil is below 0.625, and the obtained current collector has a protective layer coated with an ultra-thin structure. Due to the ultra-thin structure of the protective layer, the current collector will not form wrinkles or bulges when being wound, thereby allowing the current collector to be wound and stored for later use; and a step-by-step coating process during the preparation of the positive electrode sheet is further achieved, avoiding the problem of the decrease in the gram capacity of the electrode sheet caused by simultaneously coating the active material layer and the protective layer.

In one embodiment, the thickness of the protective layer is 0-5 µm and not 0, for example, it may be 0.2 µm, 0.5 µm, 1 µm, 2 µm, 3 µm, 4 µm or 5 µm, but is not limited to the listed numerical values, and other non-listed numerical values in the numerical value range are also applicable, preferably 1-3 µm.

In one embodiment, a material of the protective layer includes a binder and inorganic particles.

In one embodiment, a mass of the binder is 70-100 wt% of a mass of the protective layer and not 100 wt%, for example, it may be 70 wt%, 75 wt%, 80 wt%, 85 wt%, 90 wt% or 95 wt%, but is not limited to the listed numerical values, and other non-listed numerical values in the numerical value range are also applicable, preferably 70-95 wt%.

The mass proportion of the binder to the protective layer is at least 70 wt%, which is different from using a small amount of binder in the protective layer in the related art. The embodiment of the present application ensures that the ratio of the thickness of the protective layer to the thickness of the foil is 0.0625-0.625 by increasing the content of the binder. By controlling the mass proportion of the binder, the thickness of the protective layer can be effectively reduced, thereby reducing the total amount of material of the protective layer, and further reducing the production cost of the current collector. When the mass proportion of the binder is less than 70 wt%, it is impossible to ensure that the ratio of the thickness of the protective layer to the thickness of the foil is within 0.625.

In one embodiment, the binder includes a first binder and a second binder, the first binder is used in an aqueous slurry, and the second binder is used in an oily slurry.

In one embodiment, the first binder includes any one or a combination of at least two of polyacrylic acid or a modified polymer thereof, polyacrylamide or a modified polymer thereof, polyurethane or a modified polymer thereof, polyethylene hydrocarbon or a modified polymer thereof, carboxyvinyl polymer, polyacrylate, polyimide, polyamide imide, carbomer resin, hydroxyl polyethylene, or polymer-bonded benzyl acrylate. Typical but non-limiting combinations include a combination of polyacrylic acid and a modified polymer thereof, and polyacrylamide, a combination of polyacrylic acid and a modified polymer thereof, and polyacrylamide and a modified polymer thereof, a combination of polyacrylamide and a modified polymer thereof, and polyurethane and a modified polymer thereof, a combination of polyurethane and a modified polymer thereof, and polyethylene hydrocarbon and a modified polymer thereof, a combination of polyethylene hydrocarbon and a modified polymer thereof, carboxyvinyl polymer, and polyacrylate, a combination of carboxyvinyl polymer, polyacrylate and polyimide, a combination of polyimide, polyamideimide and carbomer resin, a combination of polyamideimide, carbomer resin and hydroxypolyethylene, and a combination of carbomer resin, hydroxypolyethylene, and polymer-bound benzyl acrylate.

In one embodiment, the second binder includes any one or a combination of at least two of polyvinylidene fluoride, a polyimide polymer, a polyacrylic polymer or a modified compound thereof, for example, the second binder may be a combination of polyvinylidene fluoride and a polyimide polymer, a combination of a polyimide polymer and a polyacrylic polymer, a combination of a polyacrylic polymer and a modified compound thereof, a combination of polyvinylidene fluoride, a polyimide polymer and a polyacrylic polymer, and a combination of a polyimide polymer, a polyacrylic polymer and a modified compound thereof.

In one embodiment, based on the mass of the protective layer, the mass percentage content of the inorganic particles is 0-30 wt% and not 0, for example, it may be 1 wt%, 5 wt%, 10 wt%, 15 wt%, 20 wt%, 25 wt% or 29 wt%, but is not limited to the listed numerical values, and other non-listed numerical values in the numerical value range are also applicable, preferably 10-30 wt%.

In one embodiment, the inorganic particles include any one or a combination of at least two of alumina, boehmite, mica, glass fiber, titanium oxide or magnesium oxide; and typical but non-limiting combinations include a combination of alumina and boehmite, a combination of boehmite and mica, a combination of mica and glass fiber, a combination of glass fiber and titanium oxide, a combination of titanium oxide and magnesium oxide, a combination of alumina, boehmite and mica, a combination of boehmite, mica and glass fiber, a combination of mica, glass fiber and titanium oxide, and a combination of glass fiber, titanium oxide and magnesium oxide.

In one embodiment, a surface density of the protective layer is 0.05-2 g/m², for example, it may be 0.05 g/m², 0.1 g/m², 0.5 g/m², 1 g/m², 1.5 g/m² or 2 g/m², but is not limited to the listed numerical values, and other non-listed numerical values in the numerical value range are also applicable.

In one embodiment, a resistance value of the protective layer is 0-1000 Ω and not 0, for example, it may be 1 mΩ, 5 mΩ, 10 mΩ, 500 mΩ, 10, 5Ω, 10 Ω, 50 Ω, 100 Ω, 500 Ω or 1000 Ω, but is not limited to the listed numerical values, and other non-listed numerical values in the numerical value range are also applicable, preferably 100 mΩ-400 Ω.

In one embodiment, an adhesion strength between the protective layer and the foil is greater than or equal to 100 N/m, for example, it may be 100 N/m, 200 N/m, 300 N/m, 400 N/m or 500 N/m, but is not limited to the listed numerical values, and other non-listed numerical values in the numerical value range are also applicable. After soaking in an electrolyte, the adhesion strength between the protective layer and the foil is greater than or equal to 20 N/m, for example, it may be 20 N/m, 50 N/m, 70 N/m, 80 N/m or 100 N/m, but is not limited to the listed numerical values, and other non-listed numerical values in the numerical value range are also applicable.

In one embodiment, the foil is an aluminum foil or a composite aluminum foil.

The protective layer can be provided on one side of the foil or on both sides of the foil according to the electrochemical performance requirements of the positive electrode current collector and positive electrode sheet, which is not specifically limited in the embodiment of the present application.

In one embodiment, the surface of the foil is provided with a blank area, with the protective layer provided on both sides of the blank area, respectively. The blank area does not contain inorganic particles, and is used for coating an active material for the preparation of the positive electrode sheet. The blank area and the protective layer spatially divide the surface of the positive electrode current collector.

In one embodiment, a width of the blank area is 10-1400 mm, for example, it may be 10 mm, 50 mm, 100 mm, 500 mm, 1000 mm or 1400 mm, but is not limited to the listed numerical values, and other non-listed numerical values in the numerical value range are also applicable.

In one embodiment, a width of the protective layer is 0-20 mm and not 0, for example, it may be 0.5 mm, 1 mm, 5 mm, 10 mm, 15 mm or 20 mm, but is not limited to the listed numerical values, and other non-listed numerical values in the numerical value range are also applicable.

In one embodiment, the blank area is provided with a conductive coating or a safety layer. The conductive coating reduces a contact resistance between the current collector and the active material.

In one embodiment, the ratio of the thickness of the protective layer to the thickness of the conductive coating is 0.5-10, for example, it may be 0.5, 1, 3, 5, 8 or 10, but is not limited to the listed numerical values, and other non-listed numerical values in the numerical value range are also applicable.

In one embodiment, the conductive coating includes a conductive carbon material and a binder.

In one embodiment, based on the mass of the conductive coating, the mass percentage content of the conductive carbon material is 40-60 wt%, for example, 40 wt%, 45 wt%, 50 wt%, 55 wt% or 60 wt%, but is not limited to the listed numerical values, and other non-listed numerical values in the numerical value range are also applicable.

In one embodiment, based on the mass of the conductive coating, the mass percentage content of the binder in the conductive coating is 40-60 wt%, for example, it may be 40 wt%, 45 wt%, 50 wt%, 55 wt%, or 60 wt%, but is not limited to the listed numerical values, and other non-listed numerical values in the numerical value range are also applicable.

In one embodiment, the ratio of the thickness of the protective layer to the thickness of the safety layer is 0.08-5, for example, it may be 0.08, 0.1, 0.5, 1, 2, 2.5 or 5, but is not limited to the listed numerical values, and other non-listed numerical values in the numerical value range are also applicable.

In one embodiment, the material of the safety layer includes a positive active material and a binder. The positive electrode active material includes lithium iron manganese phosphate and/or lithium iron phosphate.

The binders in the conductive coating layer and the safety layer each independently includes any one or a combination of at least two of polyacrylic acid or a modified polymer thereof, polyacrylamide or a modified polymer thereof, polyurethane or a modified polymer thereof, polyethylene hydrocarbon or a modified polymer thereof, carboxyvinyl polymer, polyacrylate, polyimide, polyamideimide, carbomer resin, hydroxypolyethylene, or polymer-bonded benzyl acrylate.

In the embodiments of the present application, the purpose of providing a conductive coating in a blank area is to improve the electrical conductivity of an electrode sheet, and the purpose of providing a safety layer is to improve the thermal stability of an active material.

According to a second aspect, an embodiment of the present application provides a preparation method for the positive electrode current collector according to the first aspect, wherein the preparation method includes the following steps:
a protective layer slurry is formulated; and
the obtained protective layer slurry is coated on the surface of the foil, after drying, the positive electrode current collector is obtained, and after preparation, the positive electrode current collector is wound and stored for later use.

In the embodiments of the present application, due to controlling the thickness of the protective layer and using an ultra-thin protective layer structure, a step-by-step coating process for the protective layer slurry and the slurry of the active material layer is achieved. By first coating the protective layer to prepare the current collector and then subsequently coating the active material slurry to prepare the electrode sheet, the prepared current collector can be wound and stored for later use, and the current collector is less likely to form wrinkles and bulges after winding.

In one embodiment, the formulating the protective layer slurry includes: a binder, inorganic particles and a solvent are mixed, and after stirring, the protective layer slurry is obtained.

In one embodiment, the solvent includes deionized water and an oily solvent, preferably deionized water.

In the embodiments of the present application, both the water-based slurry and the oil-based slurry can achieve the purpose of providing an ultra-thin protective layer structure. Compared with the oil-based slurry, the water-based slurry is environmentally friendly and has low pollution, and the step-by-step coating process using the water-based slurry results in good adhesion strength between the slurry and the foil; and after soaking in an electrolyte, the slurry is less likely to powder off when wiped.

In one embodiment, the protective layer slurry further includes a surfactant. By adding the surfactant, the wettability of the ceramic slurry on the foil is improved, the coating leakage rate is reduced, and the coating efficiency is improved.

In one embodiment, the surfactant includes any one or a combination of at least two of a-[3,5-dimethyl-1-(2-methylpropyl)hexyl]-w-hydroxy-poly(oxy-1,2-ethanediyl), polyoxyethylene 2,6,8-trimethyl-4-nonylether, or polyoxyethylene trimethyl nonyl ether; and typical but non-limiting combinations include a combination of a-[3,5-dimethyl-1-(2-methylpropyl)hexyl]-w-hydroxy-poly(oxy-1,2-ethanediyl) and polyoxyethylene 2,6,8-trimethyl-4-nonylether, a combination of polyoxyethylene 2,6,8-trimethyl-4-nonylether and polyoxyethylene trimethyl nonyl ether, and a combination of a-[3,5-dimethyl-1-(2-methylpropyl)hexyl]-w-hydroxy-poly(oxy-1,2-ethanediyl) and polyoxyethylene trimethyl nonyl ether.

In one embodiment, a mass of the surfactant is less than 1 wt% of the mass of the protective layer slurry, for example, it may be 0.2 wt%, 0.4 wt%, 0.6 wt%, 0.8 wt%, or 0.9 wt%, but is not limited to the listed numerical values, and other non-listed numerical values in the numerical value range are also applicable.

In one embodiment, the method for mixing is as follows: a binder is added to a solvent under dual planetary stirring at a revolution speed of 20-30 rpm and a rotation speed of 700-900 rpm for 15-40 minutes, and then inorganic particles are added under dual planetary stirring at a revolution speed of 20-30 rpm and a rotation speed of 2200-2600 rpm for 250-350 minutes.

In one embodiment, during the mixing process, the surfactant and the binder are added simultaneously.

In one embodiment, a viscosity of the protective layer slurry is 0-500 mPa•s and not 0, for example, it may be 50 mPa•s, 100 mPa•s, 200 mPa•s, 300 mPa•s, 400 mPa•s or 500 mPa•s, but is not limited to the listed numerical values, and other non-listed numerical values in the numerical range are also applicable.

In one embodiment, a solid content of the protective layer slurry is 0-20% and not 0, for example, it may be 5%, 10%, 15%, 18% or 20%, but is not limited to the listed numerical values, and other non-listed numerical values in the numerical value range are also applicable, optionally 5-15%.

In one embodiment, a coating speed is 0.5-100 m/min, for example, it may be 0.5 m/min, 1 m/min, 5 m/min, 10 m/min, 20 m/min, 50 m/min or 100 m/min, but is not limited to the listed numerical values, and other non-listed numerical values in the numerical value range are also applicable.

In one embodiment, a drying temperature is 80-120°C, for example, it may be 80°C, 90°C, 100°C, 110°C or 120°C, but is not limited to the listed numerical values, and other non-listed numerical values in the numerical value range are also applicable.

In one embodiment, the surface of the foil is provided with a blank area, with the protective layer provided on both sides of the blank area, respectively.

In one embodiment, the blank area is provided with a conductive coating or a safety layer.

In one embodiment, the preparation method for the positive electrode current collector further includes: a conductive coating slurry or a safety layer slurry is coated in the blank area.

As an optional technical solution of the preparation method according to the second aspect of the present application, the preparation method includes the following steps:
a binder is added in a solvent in proportion under dual-planetary stirring at a revolution speed of 20-30 rpm and a rotation speed of 700-900 rpm for 15-40 minutes, and then inorganic particles are added under dual-planetary stirring at a revolution speed of 20-30 rpm and a rotation speed of 2200-2600 rpm for 250-350 minutes, to obtain a protective layer slurry having a viscosity of 0-500 mPa•s and not 0 and a solid content of 0-20% and not 0; and
the obtained protective layer slurry is coated on the surface of a foil, and the conductive coating slurry or the safety layer slurry is coated on a blank area of the surface of the foil, wherein the protective layer slurry is provided on both sides of the blank area, respectively, the coating speed is 0.5-100 m/min, and after drying at 80-120°C, the positive electrode current collector is obtained.

According to a third aspect, the present application provides a positive electrode sheet. The positive electrode sheet includes the positive electrode current collector according to the first aspect and an active material layer provided on the surface of the positive electrode current collector. Both sides of the active material layer are provided with the protective layer, respectively.

According to a fourth aspect, an embodiment of the present application provides a preparation method for the positive electrode sheet according to the third aspect, wherein the preparation method includes the following steps:
a slurry of the active material layer is formulated; and
the obtained slurry of the active material layer is coated on the positive electrode current collector obtained by the preparation method according to the second aspect, and after drying, the positive electrode sheet is obtained.

In one embodiment, the preparation method of the positive electrode sheet includes the following steps:
a protective layer slurry is formulated, the obtained protective layer slurry is coated on the surface of a foil, and after drying, a positive electrode current collector is obtained, the positive electrode current collector includes a protective layer; and
a slurry of the active material layer is formulated, the obtained slurry of the active material layer is coated between adjacent protective layers of the positive electrode current collector, and after drying, the positive electrode sheet is obtained.

In the related art, for the process of simultaneously coating a ceramic slurry having a safety protection function and a slurry of an active material, an electrode sheet is directly prepared after one-step coating. However, in the process of one-step coating, as the protective layer slurry and the slurry of the active material are two slurries which are significantly different in characteristics, such as viscosity and solid content, this difference greatly limits the speed of simultaneously coating, and also increases the instability of the coating surface density, thereby resulting in poor battery consistency.

In the embodiments of the present application, by first coating the protective layer to prepare the current collector and then subsequently coating the slurry of the active material to prepare the electrode sheet, the preparation time of the positive electrode sheet is shortened, the consistency of battery production is improved, and the prepared current collector can be wound and stored for later use.

In one embodiment, the slurry of the active material layer includes an active material, a conductive agent, a binder, and a solvent.

In one embodiment, a solid content of the slurry of the active material layer is 45-80 wt%, for example, it may be 45 wt%, 50 wt%, 60 wt%, 70 wt%, or 80 wt%, but is not limited to the listed numerical values, and other non-listed numerical values in the numerical value range are also applicable.

In one embodiment, a viscosity of the slurry of the active material layer is 2000-3000 mPa•s, for example, it may be 2000 mPa•s, 2200 mPa•s, 2400 mPa•s, 2600 mPa•s, 2800 mPa•s, or 3000 mPa•s, but is not limited to the listed numerical values, and other non-listed numerical values in the numerical value range are also applicable.

In one embodiment, the coating speed is 0.5-100 m/min, for example, it may be 0.5 m/min, 1 m/min, 5 m/min, 10 m/min, 20 m/min, 50 m/min or 100 m/min, but is not limited to the listed numerical values, and other non-listed numerical values in the numerical value range are also applicable.

In one embodiment, the slurry of the active material layer is coated on a blank area of the positive electrode current collector.

In one embodiment, the drying temperature is 80-120 °C, for example, it may be 80°C, 90°C, 100°C, 110°C or 120°C, but is not limited to the listed numerical values, and other non-listed numerical values in the numerical value range are also applicable.

As an optional technical solution of the preparation method for the positive electrode sheet according to the fourth aspect of the present application, the preparation method includes:
a binder is added in a solvent in proportion under dual-planetary stirring at a revolution speed of 20-30 rpm and a rotation speed of 700-900 rpm for 15-40 minutes, and then inorganic particles are added under dual-planetary stirring at a revolution speed of 20-30 rpm and a rotation speed of 2200-2600 rpm for 250-350 minutes, to obtaining a protective layer slurry having a viscosity of 0-500 mPa•s and not 0 and a solid content of 0-20% and not 0; and the obtained protective layer slurry is coated on the surface of a foil, and a conductive coating slurry or a slurry of the safety layer is coated on a blank area of the surface of the foil, wherein the protective layer slurry is provided on both sides of the blank area, respectively, the coating speed is 0.5-100 m/min, and after drying at 80-120°C, the positive electrode current collector is obtained, the positive electrode current collector includes a protective layer; the method for coating the protective layer slurry and the conductive coating slurry, or coating the protective layer slurry and the safety layer slurry may be step-by-step coating or simultaneous coating; and
an active material, a conductive agent and a binder are mixed in proportion to formulate a slurry of an active material layer having a viscosity of 2000-3000 mPa•s and a solid content of 45-80%, the obtained slurry of the active material layer is coated between adjacent protective layer parts in the obtained positive electrode current collector at a speed of 0.5-100 m/min, and after drying at 80-120°C, the positive electrode sheet is obtained.

According to a fifth aspect, an embodiment of the present application provides a battery. The battery includes the positive electrode current collector according to the first aspect or the positive electrode sheet according to the third aspect.

In a sixth aspect, an embodiment of the present application provides an electric device. The electric device includes the battery according to the fifth aspect.

From the described technical solutions, the present application has the following beneficial effects:
in the present application, by controlling the thickness of the protective layer containing inorganic particles, it is ensured that the ratio of the thickness of the protective layer to the thickness of the foil is in the range of 0.05-0.7, thereby obtaining a current collector having an ultra-thin protective layer. Due to the ultra-thin structure of the protective layer, the current collector will not form wrinkles or bulges when being wound, so that the current collector can be wound and stored for later use. This further enables a step-by-step coating process in the preparation of the positive electrode sheet, avoiding the problem of the decrease in the gram capacity of the electrode sheet caused by simultaneously coating the active material layer and the protective layer. In addition, the adhesion strength between the protective layer and the foil is strong, the protective layer is less likely to peel off from the foil, and the protective layer has a thin thickness, and does not become brittle after two baking processes (if the active material layer is coated first, the active material layer needs to undergo two baking processes, the weight loss ratio of the electrode sheet is small, and the evaporation of the solvent is too large, causing the electrode sheet to become brittle, and reducing the use performance of the electrode sheet).

Other aspects will become apparent upon reading and understanding the drawings and detailed description.

### Brief Description of the Drawings

The accompanying drawings are used for providing a further understanding of the technical solutions of the present disclosure, constitute a part of the description, and are used for explaining the technical solutions of the present disclosure together with the embodiments of the present disclosure, but do not constitute a limitation to the technical solutions of the present disclosure.
Fig. 1 is a schematic structural diagram of the positive electrode current collector according to Examples 1 to 11.
Fig. 2 is a schematic structural diagram of the positive electrode current collector according to Examples 12 to 15.
Fig. 3 is a schematic structural diagram of the positive electrode current collector according to Examples 16 to 18.

1, foil, 2, blank area, 3, protective layer, 4, conductive coating, 5, safety layer.

### Detailed Description of the Embodiments

The technical solutions of the present disclosure will be further described below with reference to the accompanying drawings and embodiments. However, the following examples are merely simple examples of the present application, and do not represent or limit the scope of protection of the present application. The scope of protection of the present application is subject to the claims.

### Example 1

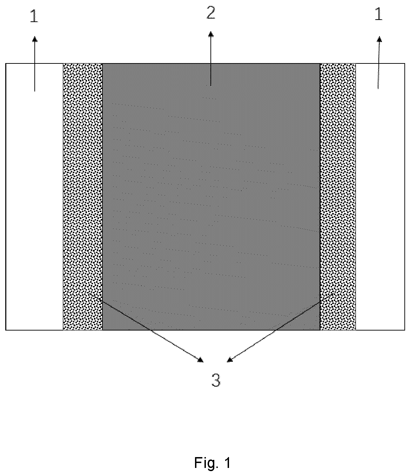

The present example provides a positive electrode current collector (the schematic structural diagram of which is shown in Fig. 1). The positive electrode current collector includes a foil 1, and a blank area 2 and a protective layer 3 that are provided on a surface of the foil 1. The foil 1 is an aluminum foil. Both sides of the blank area 2 are provided with the protective layers 3, respectively. A width of the blank area 2 is 178 mm, and a width of each protective layer 3 is 8 mm.

A thickness of the aluminum foil 1 is 16 µm, a thickness of the protective layer 3 is 1 µm, and a ratio of the thickness of the protective layer 3 to the thickness of the aluminum foil 1 is 0.625.

The material of the protective layer 3 includes polyacrylic acid and boehmite, a mass of the polyacrylic acid is 90 wt% of a mass of the protective layer 3, a mass of the boehmite is 10 wt% of the mass of the protective layer 3, and a surface density of the protective layer 3 is 0.48 g/m².

A preparation method for the positive electrode current collector includes:
according to a mass ratio of a binder to inorganic particles, after the binder is added to deionized water, the mixture is stirred with dual-planetary stirring at a revolution speed of 25 rpm and a rotation speed of 800 rpm for 30 minutes, and then the inorganic particles are added under vacuum dual-planetary stirring at a revolution speed of 25 rpm and a rotation speed of 2500 rpm for 300 minutes, obtaining a protective layer slurry with a solid content of 10%; and
the obtained protective layer slurry is coated on the surface of the foil, a coating speed is 100 m/min, a preparation time for coating 2000 meters is 20 minutes, and after drying at 90°C, the positive electrode current collector is obtained, which is wound and stored for later use.

### Example 2

The present example provides a positive electrode current collector (the schematic structural diagram of which is shown in Fig. 1). The positive electrode current collector differs from Example 1 in that: the mass of polyacrylic acid is 80 wt% of the mass of protective layer 3, the mass of boehmite is 20 wt% of the mass of protective layer 3, and the surface density of the protective layer 3 is 1.41 g/m²; and the thickness of the foil 1 is 13 µm, the thickness of the protective layer 3 is 3 µm, and the ratio of the thickness of the protective layer 3 to the thickness of the foil 1 is 0.231.

### Example 3

The present example provides a positive electrode current collector (the schematic structural diagram of which is shown in Fig. 1). The positive electrode current collector differs from Example 1 in that: the mass of polyacrylic acid is 70 wt% of the mass of protective layer 3, the mass of boehmite is 30 wt% of the mass of protective layer 3, and the surface density of the protective layer 3 is 1.72 g/m²; and the thickness of the foil 1 is 8 µm, the thickness of the protective layer 3 is 5 µm, and the ratio of the thickness of the protective layer 3 to the thickness of the foil 1 is 0.625.

### Example 4

The present example provides a positive electrode current collector (the schematic structural diagram of which is shown in Fig. 1). The positive electrode current collector differs from Example 1 in that: the polyacrylic acid is replaced with polyvinylidene fluoride, the mass of polyvinylidene fluoride is 75 wt% of the mass of protective layer 3, the mass of boehmite is 25 wt% of the mass of protective layer 3, and the surface density of the protective layer 3 is 1.79 g/m²; and the thickness of the foil 1 is 12 µm, the thickness of the protective layer 3 is 5 µm, and the ratio of the thickness of the protective layer 3 to the thickness of the foil 1 is 0.417.

The preparation method for the positive electrode current collector differs from Example 1 in that: deionized water, used as a solvent, is replaced with an equal amount of N-methyl pyrrolidone (NMP).

### Example 5

The present example provides a positive electrode current collector (the schematic structural diagram of which is shown in Fig. 1). The positive electrode current collector differs from Example 1 in that: the boehmite is replaced with aluminum oxide, the mass of the polyacrylic acid is 78 wt% of the mass of the protective layer 3, the mass of the aluminum oxide is 22 wt% of the mass of the protective layer 3, and the surface density of the protective layer 3 is 1.84 g/m²; and the thickness of the foil 1 is 13 µm, the thickness of the protective layer 3 is 5 µm, and the ratio of the thickness of the protective layer 3 to the thickness of the foil 1 is 0.386.

### Example 6

The present example provides a positive electrode current collector (the schematic structural diagram of which is shown in Fig. 1). The positive electrode current collector differs from Example 1 in that: the boehmite is replaced with titanium oxide, the polyacrylic acid is replaced with polyacrylic amide, the mass of the polyacrylic amide is 82 wt% of the mass of the protective layer 3, the mass of the titanium oxide is 18 wt% of the mass of the protective layer 3, and the surface density of the protective layer 3 is 1.34 g/m²; and the thickness of the foil 1 is 10 µm, the thickness of the protective layer 3 is 2 µm, and the ratio of the thickness of the protective layer 3 to the thickness of the foil 1 is 0.2.

### Example 7

The present example provides a positive electrode current collector (the schematic structural diagram of which is as shown in Fig. 1). The positive electrode current collector differs from Example 1 in that: the boehmite is replaced with magnesium oxide, the polyacrylic acid is replaced with carboxyvinyl polymer, the mass of the carboxyvinyl polymer is 85 wt% of the mass of the protective layer 3, the mass of the magnesium oxide is 15 wt% of the mass of the protective layer 3, and the surface density of the protective layer 3 is 1.51 g/m²; and the thickness of the foil 1 is 15 µm, the thickness of the protective layer 3 is 3 µm, and the ratio of the thickness of the protective layer 3 to the thickness of the foil 1 is 0.2.

### Example 8

The present example provides a positive electrode current collector (the schematic structural diagram of which is shown in Fig. 1). The positive electrode current collector differs from Example 1 in that: the boehmite is replaced with mica and glass fiber, the polyacrylic acid is replaced with hydroxyl polyethylene, the mass of the hydroxyl polyethylene is 79 wt% of the mass of the protective layer 3, the mass of the mica and glass fiber is 21 wt% of the mass of the protective layer 3, and the surface density of the protective layer 3 is 1.27 g/m²; and the thickness of the foil 1 is 12 µm, the thickness of the protective layer 3 is 2 µm, and the ratio of the thickness of the protective layer 3 to the thickness of the foil 1 is 0.167.

### Example 9

The present example provides a positive electrode current collector (the schematic structural diagram of which is as shown in Fig. 1). The positive electrode current collector differs from Example 1 in that: the aluminum foil is replaced with a composite aluminum foil, the mass of polyacrylic acid is 73 wt% of the mass of a protective layer 3, the mass of boehmite is 27 wt% of the mass of the protective layer 3, and the surface density of the protective layer 3 is 1.9 g/m²; and the thickness of the foil 1 is 16 µm, the thickness of the protective layer 3 is 5 µm, and the ratio of the thickness of the protective layer 3 to the thickness of the foil 1 is 0.3125.

### Example 10

The present example provides a positive electrode current collector (the schematic structural diagram of which is shown in Fig. 1). The positive electrode current collector differs from Example 1 in that: the polyacrylic acid is replaced with polyvinylidene fluoride, the mass of polyvinylidene fluoride is 95 wt% of the mass of the protective layer, the mass of boehmite is 5 wt% of the mass of the protective layer 3, and the surface density of the protective layer 3 is 0.55 g/m²; and the thickness of the foil 1 is 13 µm, the thickness of the protective layer 3 is 1 µm, and the ratio of the thickness of the protective layer 3 to the thickness of the foil 1 is 0.077.

The preparation method for the positive electrode current collector differs from Example 1 in that: deionized water, used as a solvent, is replaced with an equal amount of NMP.

### Example 11

The present example provides a positive electrode current collector (the schematic structural diagram of which is shown in Fig. 1). The positive electrode current collector differs from Example 1 in that: in the preparation method for the positive electrode current collector, the protective layer slurry further includes 1 wt% of polyoxyethylene trimethyl nonyl ether as a surfactant.

### Example 12

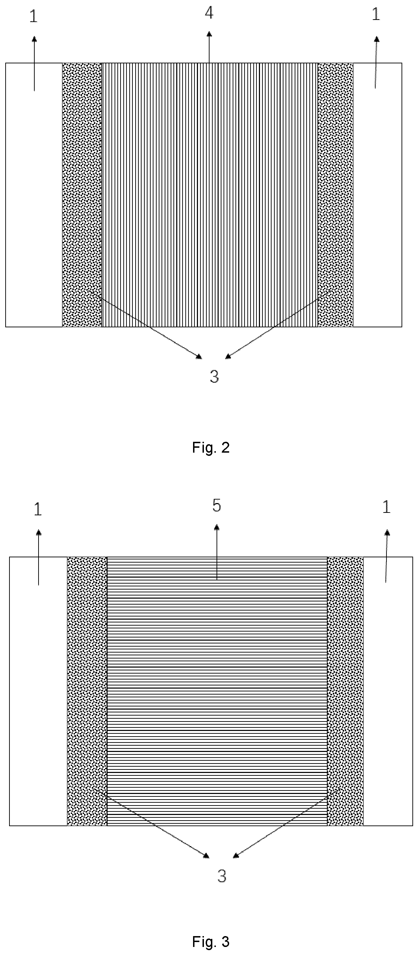

The present example provides a positive electrode current collector (the structure of which is shown in Fig. 2). The positive electrode current collector differs from Example 1 in that: a conductive coating 4 is provided on the positive electrode current collector, the material of the conductive coating 4 includes conductive carbon black and a binder, the thickness of the conductive coating 4 is 1.2 µm, and a ratio of the thickness of the protective layer 3 to a thickness of the conductive coating 4 is 0.9.

### Example 13

The present example provides a positive electrode current collector (the structure of which is shown in Fig. 2). The positive electrode current collector differs from Example 2 in that: a conductive coating 4 is provided on the positive electrode current collector, the material of the conductive coating 4 is conductive carbon black and a binder in a mass ratio of 4:6, the thickness of the conductive coating 4 is 6 µm, and the ratio of the thickness of the protective layer 3 to the thickness of the conductive coating 4 is 0.5.

### Example 14

The present example provides a positive electrode current collector (the structure of which is shown in Fig. 2). The positive electrode current collector differs from Example 3 in that: a conductive coating 4 is provided on the positive electrode current collector, the material of the conductive coating 4 is conductive carbon black and a binder in a mass ratio of 6:4, the thickness of the conductive coating 4 is 0.5 µm, and the ratio of the thickness of the protective layer 3 to the thickness of the conductive coating 4 is 10.

### Example 15

The present example provides a positive electrode current collector (the structure of which is shown in Fig. 2). The positive electrode current collector differs from Example 12 in that: the conductive coating slurry and the protective layer slurry are coated simultaneously.

### Example 16

The present example provides a positive electrode current collector (the structure of which is shown in Fig. 3). The positive electrode current collector differs from Example 1 in that: a safety layer 5 is provided on the positive electrode current collector, the material of the safety layer 5 includes a ternary material and a binder, a thickness of the safety layer 5 is 12.5 µm, and a ratio of the thickness of the protective layer 3 to the thickness of the safety layer 5 is 0.08.

### Example 17

The present example provides a positive electrode current collector (the structure of which is shown in Fig. 3). The positive electrode current collector differs from Example 2 in that: a safety layer 5 is provided on the positive electrode current collector, the material of the safety layer 5 includes a ternary material and a binder, the thickness of the safety layer 5 is 2.15 µm, and the ratio of the thickness of the protective layer 3 to the thickness of the safety layer 5 is 1.39.

### Example 18

The present example provides a positive electrode current collector (the structure of which is shown in Fig. 3). The positive electrode current collector differs from Example 3 in that: a safety layer 5 is provided on the positive electrode current collector, the material of the safety layer 5 includes a ternary material and a binder, the thickness of the safety layer 5 is 1 µm, and the ratio of the thickness of the protective layer 3 to the thickness of the safety layer 5 is 5.

### Comparative Example 1

The present comparative example provides a positive electrode current collector. The positive electrode current collector differs from Example 1 in that: the polyacrylic acid is replaced with polyvinylidene fluoride, the mass of polyvinylidene fluoride is 15 wt% of the mass of the protective layer, the mass of boehmite is 85 wt% of the mass of the protective layer, and the surface density of the protective layer is 6.38 g/m²; and the thickness of the aluminum foil is 16 µm, the thickness of the protective layer is 5 µm, and the ratio of the thickness of the protective layer to the thickness of the aluminum foil is 0.938.

As a protective layer in the related art is typically coated simultaneously with the active material layer, the solvent used for the protective layer in the related art must be the same as that used for the active material layer, that is, an oily solvent is used. The preparation method for the positive electrode current collector differs from Example 1 in that: deionized water, used as a solvent, is replaced with an equal amount of NMP.

### Comparative Example 2

The present comparative example provides a positive electrode current collector. The positive electrode current collector differs from Example 1 in that: the mass of polyacrylic acid is 12 wt% of the mass of a protective layer, the mass of boehmite is 88 wt% of the mass of the protective layer, the surface density of the protective layer is 6.1 g/m²; and the thickness of the aluminum foil is 13 µm, the thickness of the protective layer is 20 µm, and the ratio of the thickness of the protective layer to the thickness of the aluminum foil is 1.538.

The preparation method for the positive electrode current collector differs from Example 1 in that: deionized water, used as a solvent, is replaced with an equal amount of NMP.

### Comparative Example 3

The present comparative example provides a positive electrode current collector. The positive electrode current collector differs from Example 1 in that: the polyacrylic acid is replaced with polyvinylidene fluoride, the mass of the polyvinylidene fluoride is 20 wt% of the mass of a protective layer, the mass of boehmite is 80 wt% of the mass of the protective layer, and the surface density of the protective layer is 7.14 g/m²; and the thickness of the aluminum foil is 8 µm, the thickness of the protective layer is 20 µm, and the ratio of the thickness of the protective layer to the thickness of the aluminum foil is 2.5.

The preparation method for the positive electrode current collector differs from Example 1 in that: deionized water, used as a solvent, is replaced with an equal amount of NMP.

### Comparative Example 4

The present comparative example provides a positive electrode current collector. The positive electrode current collector differs from Example 1 in that: the mass of polyacrylic acid is 15 wt% of the mass of a protective layer, the mass of boehmite is 85 wt% of the mass of the protective layer, and the surface density of the protective layer is 6.62 g/m²; and the thickness of the aluminum foil is 13 µm, the thickness of the protective layer is 12 µm, and the ratio of the thickness of the protective layer to the thickness of the aluminum foil is 0.923.

### Example 19

The present example provides a positive electrode sheet, the positive electrode sheet includes the positive electrode current collector of Example 2 and an active material layer provided on the positive electrode current collector.

The preparation method for the positive electrode sheet includes the following steps:
according to the mass ratio of lithium iron phosphate (LiFePO₄, LFP), conductive agent (conductive carbon black), and binder (polyvinylidene fluoride, PVDF) of 95.5%:2.5%:2.0%, a slurry of the active material layer is formulated, NMP is selected as a solvent, and the obtained slurry of the active material has a solid content of 60% and a viscosity of 8500 mPa•s; and
the obtained slurry of the active material layer is coated on a blank area of the foil at a speed of 50 m/min, a coating time for coating 2000 meters of active material is 40 minutes, and after drying at 90°C, the positive electrode sheet is obtained.

### Example 20

The present example provides a positive electrode sheet. The positive electrode sheet differs from Example 19 in that: the positive electrode current collector according to Example 2 is replaced with the positive electrode current collector according to Example 15.

### Example 21

The present example provides a positive electrode sheet. The positive electrode sheet differs from Example 19 in that:
the preparation method for the positive electrode sheet includes the following steps:
according to the mass ratio of ternary material (Li(NiCoMn)O₂, NCM), conductive agent (conductive carbon black), and binder (polyvinylidene fluoride, PVDF) of 97%:1.5%:1.5%, a slurry of the active material layer is formulated, NMP is selected as a solvent, and the obtained active material slurry has a solid content of 74% and a viscosity of 9500 mPa•s; and
the obtained slurry of the active material layer is coated on a blank area of the foil at a speed of 100 m/min, a coating time for coating 2000 meters of active material is 20 minutes, and after drying at 90°C, the positive electrode sheet is obtained.

### Example 22

The present example provides a positive electrode sheet. The positive electrode sheet differs from Example 21 in that: the positive electrode current collector according to Example 2 is replaced with the positive electrode current collector according to Example 15.

### Example 23

The present example provides a positive electrode sheet. The positive electrode sheet differs from Example 21 in that: the positive electrode current collector according to Example 2 is replaced with the positive electrode current collector according to Example 17.

### Comparative Example 5

The present comparative example provides a positive electrode sheet. The positive electrode sheet differs from Example 19 in that: the positive electrode current collector is replaced with an aluminum foil of equal thickness; and
the preparation method for the positive electrode sheet differs from Example 19 in that: the obtained slurry of the active material layer is coated on the aluminum foil at a speed of 30 m/min, and the coating time for coating 2000 meters of active material is 66.7 minutes.

### Comparative Example 6

The present comparative example provides a positive electrode sheet. The positive electrode sheet differs from Comparative Example 5 in that: a conductive coating is provided on the aluminum foil.

### Comparative Example 7

The present comparative example provides a positive electrode sheet. The positive electrode sheet differs from Comparative Example 5 in that: in the preparation method for the positive electrode sheet, the slurry of the active material is replaced with one formulated according to the mass ratio of ternary material, conductive agent, and binder of 97%: 1.5%: 1.5%; the obtained slurry of the active material layer is coated on an aluminum foil at a speed of 50 m/min; and the coating time for coating 2000 meters of active material is 40 minutes.

### Comparative Example 8

The present comparative example provides a positive electrode sheet. The positive electrode sheet differs from Comparative Example 7 in that: a conductive coating is provided on the aluminum foil.

### Comparative Example 9

The present comparative example provides a positive electrode sheet. The positive electrode sheet differs from Comparative Example 7 in that: a safety layer is provided on the aluminum foil.

### Application Example 1

The present application example provides a lithium ion battery. The lithium ion battery includes the positive electrode sheet according to Example 19.

### Application Example 2

The present application example provides a lithium ion battery. The lithium ion battery includes the positive electrode sheet according to Example 20.

### Application Example 3

The present application example provides a lithium ion battery. The lithium ion battery includes the positive electrode sheet according to Example 21.

### Application Example 4

The present application example provides a lithium ion battery. The lithium ion battery includes the positive electrode sheet according to Example 22.

### Application Example 5

The present application example provides a lithium ion battery. The lithium ion battery includes the positive electrode sheet according to Example 23.

### Comparative Application Example 1

The present comparative application example provides a lithium ion battery. The lithium ion battery includes the positive electrode sheet according to Comparative Example 5.

### Comparative Application Example 2

The present comparative application example provides a lithium ion battery. The lithium ion battery includes the positive electrode sheet according to Comparative Example 6.

### Comparative Application Example 3

The present comparative application example provides a lithium ion battery. The lithium ion battery includes the positive electrode sheet according to Comparative Example 7.

### Comparative Application Example 4

The present comparative application example provides a lithium ion battery. The lithium ion battery includes the positive electrode sheet according to Comparative Example 8.

### Comparative Application Example 5

The present comparative application example provides a lithium ion battery. The lithium ion battery includes the positive electrode sheet according to Comparative Example 9.

The obtained positive electrode current collectors and positive electrode sheets are tested, and they are assembled into lithium-ion batteries for electrochemical performance testing. The testing methods and results are as follows.

Thickness measurement method: a high-precision micrometer with a resolution of 0.0001 mm, such as the Japanese imported Mitutoyo micrometer 293-100-10, with a measuring range of 0-25 mm is used to measure the thickness of at least 20 different points on a protective layer, wherein each point is spaced by 10 cm, and the average thickness of all the measured points is recorded as the thickness of the coating.

Surface density measurement method: a CY-MRX-CP60 button cell punching machine with cutting sizes ranging from Φ0mm to Φ100mm is used to punch out small circular discs from at least 20 different points on a protective layer, wherein each point is spaced by 10 cm, the edges of the small discs are smooth, without burrs or notches, and the average weight of all small circular discs is recorded, the average weight/the area of the small circular discs = the surface density.

Adhesion strength test: a Shimadzu tensile machine and a 180° angle peel method are used to test the adhesion strength between a protective layer and a current collector; and the protective layer is cut into strip samples of 10 mm * 80 mm, and the length and width values thereof can be proportionally adjusted according to actual situations. Along a length direction of a sample, an insulation layer surface of one end of the sample is adhered to a steel plate using a double-sided adhesive tape, wherein an adhered length is not less than 80 mm; and then the steel plate is fixed at a corresponding position of a tensile machine, the other end of the sample which is not adhered to the steel plate is pulled up, and the electrode sheet sample is placed into a chuck for clamping, either by using a connector or directly, wherein the portion of the sample that is pulled up forms a 180° angle in space with the steel plate. The chuck pulls the electrode sheet at a speed of 15 mm/min to separate the protective layer from the current collector, and the average pulling force measured in a stable area of 20-60 mm is recorded as the adhesion strength between the protective layer and the current collector.

Soaking in electrolyte: the protective layer is cut into strip samples of 10 mm * 80 mm, and the length and width values of the samples can be proportionally adjusted according to actual situations. Strip samples are soaked in an electrolyte with a composition of EC (ethylene carbonate): DEC (diethyl carbonate): DMC (dimethyl carbonate) = 1:1:1, placed in an oven at 45°C for 7 days, then remove the strip samples and gently wipe off the electrolyte, and immediately perform adhesion strength testing on the strip samples according to the adhesion strength test method to obtain the adhesion strength after soaking in the electrolyte.

Bulge test: after drying, a positive electrode current collector having a length of 2000 m is wound to obtain a cylindrical current collector roll; the current collector roll is fixed on a rack; and by using a film ruler (precision: 1 mm) to wrap around a circumference of the wound positive electrode current collector once, the circumference of the protective layer of the wound positive electrode current collector and the circumference of the blank area of the wound positive electrode current collector are obtained, respectively. Specifically, five positions are selected for measurement in each area, and the average of the measurement results is taken to obtain the circumference of the tested area. Definition: a bulge height = the circumference of the protective layer - the circumference of the blank area, and if the bulge height is ≤ 2 mm, the current collector is determined to have no bulge. With regard to a current collector coated with a conductive coating or a safety layer, the bulge height = the circumference of the protective layer - the circumference of the conductive coating/safety layer area, and if the height is ≤ 2 mm, the current collector is determined to have no bulge.

Gram capacity measurement method: LFP-voltage 2.5-3.65V, current 0.33C; and NCM-voltage 2.8-4.3V, current 0.33C. The gram capacity is calculated based on the full-battery capacity assembled with a negative electrode sheet and the actual surface density. The gram capacity = (capacity * 1000)/(surface density * S * loading), wherein the unit of gram capacity is mAh/g, the unit of capacity is Ah, and the unit of surface density is g/m2; and calculated based on the actual coating material, S is the area of the coated active material area, with the unit m², and loading is the proportion of the positive electrode main material. Full-battery capacity refers to the capacity determined by the first cycle at 0.33 C after the battery core is formed by assembling with a negative electrode sheet and subjected to chemical formation and capacity grading.

The preparation parameters and test results of the examples, application examples and comparative examples are as shown in following tables 1-5:

**Table 1 Preparation parameters and test results for Examples 1-11 and Comparative Examples 1-4**

| Test no. | Foil | Inorgan ic particle content (%) | Binde r content (%) | Protecti ve layer thickness | Foil thickness (µm) | Protective layer thickness/f oil thickness | Solvent used in preparin 9 protective layer | coatin g speed of Positiv e current collect or (m/min) | Solid conte nt (%) | Wheth er or not to bulge after 2000 meters of windin9 | Adhesi on strengt h (N/m) | Adhesio n strength after soaking in electrolyte (N/m) |
|---|---|---|---|---|---|---|---|---|---|---|---|---|
| Example 1 | Aluminiu m foil | 10 | 90 | 1 | 16 | 0.0625 | Deioniz ed water | 100 | 10 | No | 957.6 | 344.6 |
| Example 2 | Aluminiu m foil | 20 | 80 | 3 | 13 | 0.231 | Deioniz ed water | 100 | 15 | No | 481.1 | 390.6 |
| Example 3 | Aluminiu m foil | 30 | 70 | 5 | 8 | 0.625 | Deioniz ed water | 100 | 15 | No | 320.3 | 73.8 |
| Example 4 | Aluminiu m foil | 25 | 75 | 5 | 12 | 0.7 | NMP | 100 | 18 | No | 1026.9 | 31.6 |
| Example 5 | Aluminiu m foil | 22 | 78 | 5 | 13 | 0.385 | Deioniz ed water | 100 | 20 | No | 401.2 | 202.9 |
| Example 6 | Aluminiu m foil | 18 | 82 | 2 | 10 | 0.2 | Deioniz ed water | 100 | 6 | No | 301.8 | 63.5 |
| Example 7 | Aluminiu m foil | 15 | 85 | 3 | 15 | 0.2 | Deioniz ed water | 100 | 10 | No | 305.4 | 75.4 |
| Example 8 | Aluminiu m foil | 21 | 79 | 2 | 12 | 0.167 | Deioniz ed water | 100 | 8 | No | 195 | 65.2 |
| Example 9 | Composi te aluminiu m foil | 27 | 73 | 5 | 16 | 0.312 | Deioniz ed water | 100 | 10 | No | 326.9 | 76.8 |
| Example 10 | Aluminiu m foil | 5 | 95 | 1 | 13 | 0.0769 | NMP | 100 | 20 | No | 1064.4 | 32.9 |
| Example 11 | Aluminiu m foil | 10 | 90 | 1 | 16 | 0.0625 | Deioniz ed water | 100 | 10 | No | 957.6 | 344.6 |
| Comparati ve example 1 | Aluminiu m foil | 85 | 15 | 15 | 16 | 0.937 | NMP | 100 | 23 | Yes | 35.4 | 9.7 |
| Comparati ve example 2 | Aluminiu m foil | 88 | 12 | 20 | 13 | 1.538 | NMP | 100 | 32 | Yes | 28.1 | 8.5 |
| Comparati ve example 3 | Aluminiu m foil | 80 | 20 | 20 | 8 | 2.5 | NMP | 100 | 39 | Yes | 43.4 | 15.6 |
| Comparati ve example 4 | Aluminiu m foil | 85 | 15 | 12 | 13 | 0.923 | Deioniz ed water | 100 | 25 | Yes | 27.6 | 8.1 |

**Table 2 Preparation parameters and test results for Examples 12-15**

| Test No. | Foil, protective layer material and thickness | A thickness of a conductive coating | Protective layer/conductive coating thickness | Whether or not to simultaneously coat conductive coating and protective layer | Whether or not to bulge after winding |
|---|---|---|---|---|---|
| Example 12 | Same as Example 1 | 1.2 | 0.9 | No | No |
| Example 13 | Same as Example 2 | 6 | 0.5 | No | No |
| Example 14 | Same as Example 3 | 0.5 | 10 | No | No |
| Example 15 | Same as Example 1 | 1.2 | 0.9 | Yes | No |

**Table 3 Preparation parameters and test results for Examples 16-18**

| Test No. | Foil, protective layer material and thickness | Safety layer thickness | Protective layer/safety layer thickness | Whether or not to bulge after winding |
|---|---|---|---|---|
| Example 16 | Same as Example 1 | 12.5 | 0.08 | No |
| Example 17 | Same as Example 2 | 2.15 | 1.39 | No |
| Example 18 | Same as Example 3 | 1 | 5 | No |

**Table 4 Preparation parameters and test results for Examples 19-23 and Comparative Examples 5-9**

| Test no. | Positive electrode current collector | Active material | Current collector coating speed (m/min) | Preparation time for 2000 meters of current collector (min) | Active material coating speed (m/min) | Coating time for 2000 meters of active material (min) | Preparation time for positive electrode sheet = preparation time for positive electrode current collector + coating time for active material | Gram capacity of positive electrode active material layer (mAh/g) |
|---|---|---|---|---|---|---|---|---|
| Example 19 | Example 2 | LEP | 100 | 20 | 50 | 40 | 60 | 141.6 |
| Example 20 | Example 14 | LEP | 100 | 20 | 50 | 40 | 60 | 140.9 |
| Example 21 | Example 2 | NCM | 100 | 20 | 100 | 20 | 40 | 191 |
| Example 22 | Example 14 | NCM | 100 | 20 | 100 | 20 | 40 | 192.1 |
| Example 23 | Example 16 | NCM | 100 | 20 | 100 | 20 | 40 | 187.4 |
| Comparative example 5 | Aluminum foil | LEP | / | 0 | 30 | 66.7 | 66.7 | 134 |
| Comparative example 6 | Aluminum foil + carbon coating conductive coating | LEP | 100 | 20 | 30 | 66.7 | 86.7 | 136.3 |
| Comparative example 7 | Aluminum foil | NCM | / | 0 | 50 | 40 | 40 | 189.3 |
| Comparative example 8 | Aluminum foil + carbon coating conductive coating | NCM | 100 | 20 | 50 | 40 | 60 | 190.7 |
| Comparative example 9 | Aluminum foil + safety coating | NCM | 100 | 20 | 50 | 40 | 60 | 185.8 |

**Table 5 Preparation parameters and test results for application examples 1-5 and application comparative examples 1-5**

| Test no. | Positive electrode sheet | Positive electrode sheet resistance (mΩ) | 25°C cycles@80% (circles) |
|---|---|---|---|
| Application example 1 | Example 19 | 365.13 | ≥3000 |
| Application example 2 | Example 20 | 220.09 | ≥4000 |
| Application example 3 | Example 21 | 740.48 | ≥1500 |
| Application example 4 | Example 22 | 413.24 | ≥2000 |
| Application example 5 | Example 23 | 611.6 | ≥2000 |
| Application comparative example 1 | Comparative example 5 | 376.16 | ≥3000 |
| Application comparative example 2 | Comparative example 6 | 216.36 | ≥4000 |
| Application comparative example 3 | Comparative example 7 | 732.5 | ≥1500 |
| Application comparative example 4 | Comparative example 8 | 411.6 | ≥2000 |
| Application comparative example 5 | Comparative example 9 | 603.4 | ≥2000 |

It can be determined from Table 1 that a conventional current collector in the related art may have bulges after winding, and in the present disclosure, by controlling the thickness of the protective layer containing the inorganic particles, it is ensured that the ratio of the thickness of the protective layer to the thickness of the foil is in the range of 0.05-0.7, thereby obtaining a positive electrode current collector having an ultra-thin protective layer. Due to the ultra-thin structure of the protective layer, the positive electrode current collector will not form wrinkles or bulges when being wound, so that the positive electrode current collector can be wound and stored for later use. This further enables a step-by-step coating process in the preparation of the positive electrode sheet.

It can be determined from Tables 2 and 3 that after adding the conductive coating and safety layer in the present application, the positive electrode current collector does not produce bulges after winding.

It can be determined from table 4 that in the present application, the ultra-thin protective layer structure is provided, such that even if a step-by-step coating process is used during the preparation, there is no significant difference in a total preparation time of the positive electrode sheet compared to the synchronous coating method, and this also avoids the problem of the decrease in the gram capacity of the electrode sheet caused by simultaneously coating the active material layer and the protective layer.

It can be determined from table 5 that when being applied to a battery, the positive electrode current collector and positive electrode sheet prepared in the present application have excellent electrical conductivity and cycling performance, and the addition of a safety layer or a conductive coating further ensures the electrochemical performance of the battery.

In the present application, due to controlling the thickness of the protective layer and using an ultra-thin protective layer structure, a step-by-step coating process for the protective layer slurry and the slurry of the active material layer is achieved. By first coating the protective layer to prepare the current collector, and then subsequently coating the active material slurry to prepare the electrode sheet, the coating speed is increased, the consistency of battery production is improved, and the prepared current collector can be wound and stored for later use.

In the present application, a water-based slurry is used. Compared with the oil-based slurry, the water-based slurry is environmentally friendly and has low pollution; the step-by-step coating process using the water-based slurry results in good adhesion strength between the slurry and the foil; and after soaking in an electrolyte, the slurry is less likely to powder off when wiped.

The present application describes the detailed structural features of the present application through the described embodiments, but the present application is not limited to the described detailed structural features, that is, it does not mean that the present application can only be implemented depending on the described detailed structural features. It should be understood by a person skilled in the art that any improvement to the present disclosure, equivalent replacement of selected components in the present disclosure, addition of auxiliary components, selection of specific manners, and the like all belong to the scope of protection and the scope of disclosure of the present application.

## Claims

1. A positive electrode current collector, wherein the positive electrode current collector comprises a foil and a protective layer provided on a surface of the foil, and the protective layer comprises inorganic particles; and
a ratio of a thickness of the protective layer to a thickness of the foil is 0.05-0.7.

2. The positive electrode current collector as claimed in claim 1, wherein the ratio of the thickness of the protective layer to the thickness of the foil is 0.0625-0.625;
optionally, the thickness of the protective layer is 0-5 µm and not 0, preferably 1-3 µm;
optionally, the protective layer comprises a binder and the inorganic particles;
optionally, based on a mass of the protective layer, a mass percentage content of the binder is 70-100 wt% and not 100 wt%, preferably 70-95 wt%;
optionally, the binder is a first binder or a second binder;
optionally, the first binder comprises any one or a combination of at least two of polyacrylic acid or a modified polymer thereof, polyacrylamide or a modified polymer thereof, polyurethane or a modified polymer thereof, polyethylene hydrocarbon or a modified polymer thereof, carboxyvinyl polymer, polyacrylate, polyimide, polyamide imide, carbomer resin, hydroxy polyethylene or polymer-bonded benzyl acrylate;
optionally, the second binder comprises any one of or a combination of at least two of polyvinylidene fluoride, a polyimide-based polymer, a polyacrylic acid polymer or a modified compound thereof;
optionally, based on the mass of the protective layer, the mass percentage content of the inorganic particles is 0-30 wt% and not 0, preferably 10-30 wt%;
optionally, the inorganic particles comprise any one or a combination of at least two of aluminum oxide, boehmite, mica, glass fiber, titanium oxide or magnesium oxide;
optionally, a surface density of the protective layer is 0.05-2 g/m²;
optionally, a resistance value of the protective layer is 0-1000 Ω and not 0, preferably 100 mΩ-400 Ω;
optionally, an adhesion strength between the protective layer and the foil is greater than or equal to 100 N/m, and after soaking in an electrolyte, the adhesion strength between the protective layer and the foil is greater than or equal to 20 N/m; and
optionally, the foil is an aluminum foil or a composite aluminum foil.

3. The positive electrode current collector as claimed in claim 1 or 2, wherein the surface of the foil is provided with a blank area, with the protective layer provided on both sides of the blank area, respectively;
optionally, a width of the blank area is 10-1400 mm; and
optionally, a width of the protective layer is 0-20 mm and not 0.

4. The positive electrode current collector as claimed in claim 3, wherein the blank area is provided with a conductive coating or a safety layer;
optionally, a ratio of a thickness of the protective layer to a thickness of the conductive coating is 0.5-10;
optionally, the conductive coating comprises a conductive carbon material and a binder;
optionally, based on a mass of the conductive coating, a mass percentage content of the conductive carbon material is 40-60 wt%;
optionally, a ratio of a thickness of the protective layer to a thickness of the safety layer is 0.08-5; and
optionally, the safety layer comprises a positive electrode active material and a binder.

5. A preparation method for the positive electrode current collector as claimed in any one of claims 1-4, wherein the preparation method comprises following steps:
formulating a protective layer slurry; and
coating the obtained protective layer slurry on the surface of the foil, and after drying, obtaining the positive electrode current collector.

6. The preparation method as claimed in claim 5, wherein the formulating the protective layer slurry comprises: mixing a binder, inorganic particles and a solvent, and after stirring, obtaining the protective layer slurry;
optionally, the solvent comprises deionized water or an oily solvent;
optionally, a method for mixing is as follows: after the binder is added to the solvent, a mixture is stirred with with dual-planetary stirring at a revolution speed of 20-30 rpm and a rotation speed of 700-900 rpm for 15-40 minutes, and then the inorganic particles are added under dual planetary stirring at a revolution speed of 20-30 rpm and a rotation speed of 2200-2600 rpm for 250-350 minutes;
optionally, a viscosity of the protective layer slurry is 0-500 mPa•s, and not 0;
optionally, a solid content of the protective layer slurry is 0-20%, and not 0, preferably 5-15%;
optionally, a coating speed is 0.5-100 m/min;
optionally, a drying temperature is 80-120°C;
optionally, the surface of the foil is provided with a blank area, both sides of the blank area are provided with the protective layer, respectively.
optionally, the blank area is provided with a conductive coating or a safety layer; and
optionally, the preparation method for the positive electrode current collector further comprises: coating a conductive coating slurry or a safety layer slurry on the blank area.

7. A positive electrode sheet, the positive electrode sheet comprising the positive electrode current collector of any one of claims 1-4 and an active material layer provided on a surface of the positive electrode current collector, wherein both sides of the active material layer are provided with the protective layer, respectively.

8. A preparation method of the positive electrode sheet as claimed in claim 7, wherein the preparation method comprises the following steps:
formulating a slurry of the active material layer; and
coating an obtained slurry of the active material layer on the positive electrode current collector obtained by the preparation method of claim 5 or 6, and after drying, obtaining the positive electrode sheet.

9. The preparation method as claimed in claim 8, wherein the slurry of the active material layer comprises an active material, a conductive agent, a binder and a solvent;
optionally, a solid content of the active material layer slurry is 45-80%;
optionally, a viscosity of the slurry of the active material layer is 2000-3000 mPa•s;
optionally, the slurry of the active material layer is coated on a blank area of the positive electrode current collector;
optionally, a coating speed is 0.5-100 m/min; and
optionally, a drying temperature is 80-120°C.

10. A battery, wherein the battery comprises the positive electrode current collector of any one of claims 1-4 or the positive electrode sheet of claim 7.

11. An electric device, wherein the electric device comprises the battery of claim 10.
